# EUROPEAN PATENT SPECIFICATION

(11) **EP 1 894 071 B1**
(45) Date of publication and mention of the grant of the patent: **13.05.2009**
(21) Application number: 06773609.0
(22) Date of filing: 20.06.2006
(51) Int. Cl.: G05B 19/418

(54) **MANAGING FIELD DEVICES HAVING DIFFERENT DEVICE DESCRIPTIONS SPECIFICATIONS IN A PROCESS CONTROL SYSTEM**
VERWALTUNG VON FELDGERÄTEN MIT VERSCHIEDENEN GERÄTEBESCHREIBUNGSSPEZIFIKATIONEN IN EINEM VERFAHRENSSTEUERUNGSSYSTEM
GESTION DE DISPOSITIFS DE TERRAIN PRESENTANT DES SPECIFICATIONS DE DISPOSITIF DIFFERENTS DANS UN SYSTEME DE COMMANDE DE PROCESSUS

(30) Priority: 20.06.2005 US 157234
(43) Date of publication of application: 05.03.2008
(73) Proprietor: Honeywell International Inc., Morristown NJ 07960 (US)
(72) Inventor: BHANDIWAD, Deepak, S., Bangalore, Karnataka 560 076 XX (IN); NARAYANA, Patra, Surjya, Bangalore, Karnataka 560 076 XX (IN); TS, Prasad, Raghavendra, Bangalore, Karnataka 560 076 XX (IN); RIZWAN, Mohammed, Bangalore, Karnataka 560 076 XX (IN)
(74) Representative: Buckley, Guy Julian
(86) International application number: PCT/US2006/023951
(87) International publication number: WO 2007/002066

(56) References cited:
- WO-A-03/029907
- WO-A2-01/96994
- US-A1- 2003 014 500
- US-A1- 2004 167 750
- US-A1- 2004 230 582

## Description

**Background of the Invention**

**Field of the Invention**

The present invention generally relates to process control systems, and more specifically to a method and apparatus for managing field devices having different device description specifications in a process control system.

**Related Art**

A process control system generally contains several field devices, which are operable to implement a desired control process (e.g., oil refinery, manufacturing operation, etc.). Examples of field devices include valves, positioners and switches, which are controlled to implement the control process.

Field devices may provide status related to the operation of the field device. For example, the status information could indicate temperature, pressure, extent of opening of a valve, light intensity, whether the device is malfunctioning (e.g., output saturated, input open), configuration values, calibration status, etc., of the field devices.

There is a general need to manage field devices provided in a process control system. Management generally refers to tasks such as monitoring and configuration of the devices. Monitoring generally entails retrieving and displaying of the status information such as that noted above. On the other hand configuration generally entails writing data into a variable of the field device.

To facilitate such management of field devices, a device description (DD) is often provided by a vendor associated with a field device.

The device description defines the manner in which commands for a corresponding field device can be issued and the manner in which the response (resulting from issuing of the management commands) is to be interpreted. The DD also contains the information about how the data should be organized and presented to the user.

The definitions in DDs are generally provided according to a DD (language) specification, which specifies the syntax (grammar) and semantics (meaning) for the definitions. Examples of DD (or DDL) specifications include HART DDL Specification 500, FF DDL specification, Profibus DDL specification etc., which are all well known in the relevant arts.

In general, using a DD specification, device description corresponding to various device types can be specified. The device description is often provided in a file, which is generally referred to as a DD file.

A typical task associated with the management of a field device is to read and decode (parsing) a corresponding DD file for extracting the desired information. Due to the differences in aspects such as syntax and semantics of various DD specifications, a prior embodiment implements multiple parsing blocks, with each parsing block being Implemented to read and decode a device description file in the corresponding specification.

Due to such multiple parsing blocks, integration of new set of field devices having device description information according to a new DD specification may present additional challenges (implementation overhead and cost). In addition, the corresponding implementations may require additional memory and processing power during operation/run-time, which could be problematic particularly in the case of thin clients.

Accordingly, what is needed is a method and apparatus which overcomes at least some of such disadvantages while managing field devices having different device description specifications in a process control system.

**Summary**

An aspect of the present invention simplifies management of field devices in a process control plant, as set forth in Claim 1.

The device descriptions in the common format can be stored in a non-volatile storage such that the corresponding information can be used even after the management system is reinitialized (e.g., turned on and off). In an embodiment, the common format corresponds to extended markup language (XML).

Further features and advantages of the invention, as well as the structure and operation of various embodiments of the invention, are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number.

**Brief Description of the Drawings**

The present invention will be described with reference to the accompanying drawings, which are described below briefly.

Figure (Fig.)1 is a block diagram illustrating an example environment in which various aspect of the present invention can be implemented.

Figure 2 is a block diagram illustrating the manner in which device description files defined according to different DD specifications are parsed in a prior embodiment.

Figure 3 is a flowchart illustrating the manner in which user interface is provided according to another aspect of the present invention.

Figure 4 is a block diagram of an example software architecture which provides user interface according to an aspect of the present invention.

Figure 5A, 5B and 5C together contain a device description portion used to illustrate the operation of various features of the present invention.

Figures 6A, 6B and 6C together contain an XML description of the device description of Figures 5A and 5B, illustrating the manner in which device descriptions can be represented using a common format according to an aspect of the present invention.

Figure 7 illustrates the manner in which a central server provides information on a dynamic menu to be displayed according to an aspect of the present invention.

Figure 8 contains a display screen illustrating the dynamic menu displayed from the device description of the common format in an embodiment of the present invention.

Figure 9 is a block diagram illustrating the details of an embodiment in which various aspects of the present invention are operative by execution of software instructions in an embodiment of the present invention.

**Detailed Description**

**1. Overview**

An aspect of the present invention converts device descriptions of field devices defined according to different DD specifications to a common format, and the data in the common format is examined in forming and displaying the user interface to users. In an embodiment, the common format corresponds to XML text.

Such an approach provides several advantages. For example, substantial portion of the task of integration of management of field devices with new device descriptions defined according to new DD specifications into a pre-existing management station, may merely entail generating the new device description in the common format. Similar advantages may be attained when integrating different devices (having corresponding different device descriptions) defined according to the same DD specification.

Several aspects of the invention are described below with reference to examples for illustration. It should be understood that numerous specific details, relationships, and methods are set forth to provide a full understanding of the invention. One skilled in the relevant art, however, will readily recognize that the invention can be practiced without one or more of the specific details, or with other methods, etc. In other instances, well_known structures or operations are not shown in detail to avoid obscuring the invention.

**2. Example Environment**

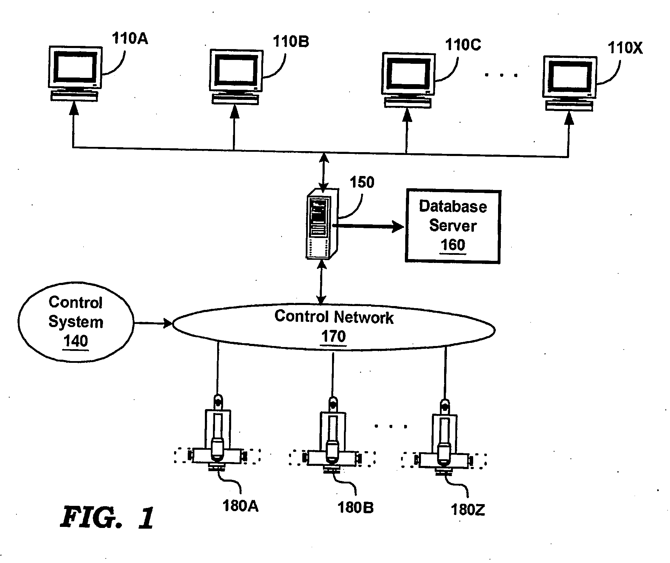

Figure 1 is a block diagram illustrating the details of an example environment in which several aspects of the present invention can be implemented. The block diagram is shown containing client systems 110A-110X, central server 150, database server 160, control network 170, control system 140, and field devices 180A-180Z. Each block is described below in detail.

Field devices 180A-180Z perform various operations under the control of control system 140 to implement a desired manufacturing process. In addition (or as a part of supporting such a process), each field device may be implemented to support various management commands (for information gathering as well as configuration) received from central server 150. Field devices 180A-180Z receive/transmit relevant data from/to central server 150 on control network 170.

Control network 170 provides connectivity between central server 150, control system 140 and a number of field devices 180A-180Z. Control system 140 issues commands to control the operation of field devices 180A-180Z on control network 170. The field devices are controlled to implement desired control processes (e.g., oil refinery, manufacturing plant). Database server 160 provides a central repository for storing information related to configuration of field devices, status of field devices, maintenance schedules, device description (generated in a common format according to various aspects of the present invention), etc.

Central server 150 receives status information from various field devices 180A through 180Z through control network 170, and makes the information available to users via client systems 110A through 110X. Commands may be issued to the field devices to retrieve the desired information. In an embodiment, information corresponding to only the subscribed information elements (including those covered by subscribed menu portions) is retrieved.

Client systems 110A through 110X provides a user interface using which users may manage field devices 180A through 180Z. Broadly, each client system accesses the device description (DD) information for a corresponding device type to determine the initial display menu to be generated for each selected device. As the user navigates the menu, the next menu portion to display is again determined based on the DD.

In case the DD indicates that the menu portion to be displayed is static (i.e., which does not change), client system 110A displays the corresponding menu (after potentially retrieving any necessary values from the field devices). In case the DD indicates that the menu portion to be displayed is dynamic (i.e., the structure itself depends on the present/then value of a variable(s)), client system 110A subscribes to central server 150 for specific menu of interest (typically what a user has presently selected), and receives the corresponding information from central server 150. The received information may contain the menu to display as well as values of information elements accessible by the tree. The received information is displayed using a suitable user interface.

The manner in which central server 150 and client systems 110A-110X together (monitoring system) facilitate management of field devices in a process control plant according to various aspects of the present invention is described in sections below. Various features of corresponding implementations will be clearer in comparison to a prior system in which at least some features of the present invention are not implemented. Accordingly, the details of such a prior system are described below first.

**3. Prior Approach**

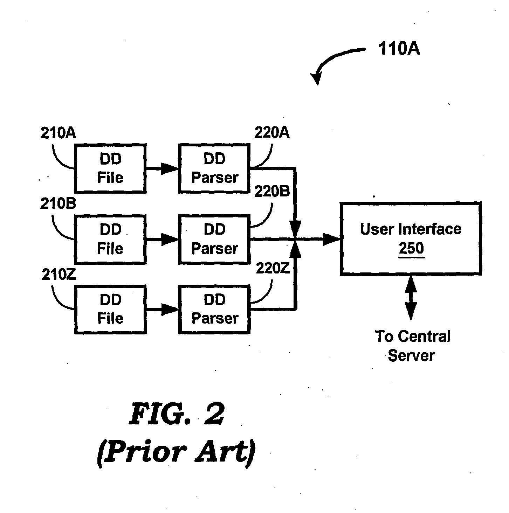

Figure 2 is a block diagram illustrating the details of implementation of client system 110A in a prior embodiment. The block diagram is shown containing user interface 250, DD parser 220A-220Z, and device description files (DD file) 210A-210Z. Each block is explained below in further detail.

Each device description file (DD file) 210A-210Z corresponds to a specific type of field device and is provided in a different DD specification. Due to such difference in the DD specifications, separate DD parsers 220A-220Z are shown associated with corresponding device description files 210A-210Z.

Each DD parser 220A-220Z parses and decoders a corresponding device description file 210A-210Z, and extracts the corresponding information. The extracted information (typically, menu representation of various parameters, list of dynamic parameters etc.) is provided to the user interface.

User interface 250 provides users a suitable interface to manage (receive desired information, configuration, etc.) the field devices of interest. In general, user interface 250 receives user action/requests for specific parameter of interest corresponding to a field device, and generates display according to the information provided by the corresponding parsing block, and interfacing with central server 150 if needed (for dynamic menus, as noted above).

One problem with the above approach is that, due to separate parsing blocks (DD parser) for each type of field devices, integration of new device type may require unacceptably high cost and/or time. Migrating the implementation on newer OS / platform would again require high cost.Various aspects of the present invention overcome some of such problems as described below in further detail.

**4. Inventive Approach**

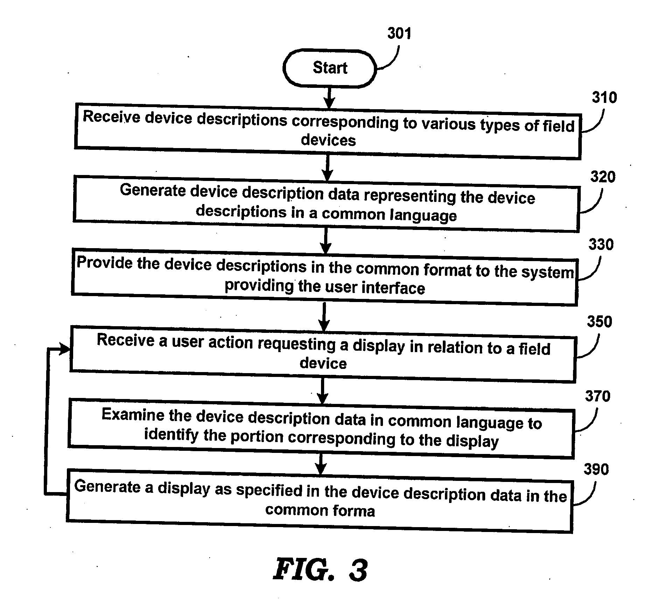

Figure 3 is a flowchart illustrating the manner in which user interface is provided according to various aspects of the present invention. Some of the steps of the flowchart are described as being implemented within client system 110A of Figure 1 merely for illustration. However, the approaches can be implemented in other systems and environments as well, as will be apparent to one skilled in the relevant arts by reading the disclosure provided herein. The flow chart begins in step 301 and control immediately passes to step 310.

In step 310, a digital processing system receives the device description files corresponding to various types of field devices. The system may receive device description file on a computer readable medium (such as floppy disk, laser disk) through corresponding interfaces such as CD drive, floppy drive, LAN etc. The received device description files generally contain description of corresponding field device types in different DD specifications as noted above.

In step 320, the system generates device description data representing the device descriptions in a common format. Such generation generally depends on the syntax/semantics of then DD specification using which the source device description is defined, and the common format in which the description is sought to be generated. Thus, the device description data (DD data) in the common format may be generated by extracting the device description from each source device description file (according to the instruction and guidelines) and arranging the extracted device description information in the common format.

In step 330, the device descriptions in the common format are provided to client system 110A providing the user interface. The device descriptions may be provided again on a computer readable medium or over network connections (LAN).

In step 350, client system 110A receives a user action requesting a display in relation to a field device of interest. Client system 110A may enable users to provide requests for various parameters of interest corresponding to a field device, and in response, converts the request into data representing information such as field device ID (selected field device), requested status information etc,. for the selected field device.

In step 370, client system 110A examines the device description data in common format (for the selected field device) to identify the portion corresponding to the requested display. Client system 110A may identify DD data corresponding to field device type of interest based on the unique ID (obtained by following fields. Manufacturer ID, Device type, Dveice revision and DD revision), and accesses the corresponding DD data. The accessed DD data is decoded according to the common format and the required device description information for the selected field device is extracted.

In step 390 clients system generates a display as specified in device description in the common format. As noted above, for display portions containing dynamic menus, central server 150 may be contacted for the present value of the variable determining the structure of the dynamic menu or for the structure of the dynamic menu itself. Control then transfers to step 350 to process the next user action.

Due to the use of the common format, integration of the management of new field device types may be simplified, as also noted in sections above. Also the supporting web based client or supporting user interface on different OS/Platform will be simpler. An example software architecture following from the approach of above is described briefly below.

5. **Example Software Architecture**

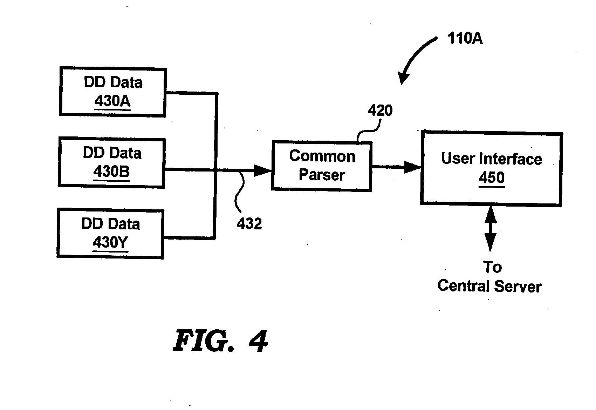

Figure 4 is a block diagram illustrating the software architecture of a client system according to various aspects of present invention. The block diagram is shown containing user interface 450, common parser 420, and DD data 430A-430Y. Each block is described below in further detail.

DD data 430A-430Y represents the device description data (containing device description information) in a common format generated from the corresponding device description files 210A-210Z. DD data 430A-430Y is generated according to steps 310 and 320 of figure 3. Path 432 logically represents the single common format interface to the different DD data 430A-430Y. DD data may be stored in database 160 (non-volatile medium or secondary storage) in the form of files.

Common parser 420 is designed to parse all of the DD data 430A-430Y, and extract the necessary information. The extracted information (typically, menu representation of various parameters, list of dynamic parameters etc,.) is provided to the user interface 450. Due to the common format of DD data 430A-430Y, a single common parser 420 reads and extracts device description information corresponding to any field device type. The information decoded may be stored in appropriate data structures (e.g., objects supported in a random access memory (RAM), not shown).

User interface 450 examines the information decoded by common parser 420 to determine the manner in which to handle each user action. In the case of displaying static menus, user interface 450 may generate display of the corresponding menu structure using the information received from the common parser.

In the case of displaying dynamic menus (which is determined based on the received decoded information), user interface 450 may subscribe to central server 150 for the dynamic menu. In one embodiment, the dynamic menu to be displayed is represented in the same common format used to represent DD data 430A-430Y, and the common format represents extended markup language (XML).

The description is continued with respect to the manner in which an example portion of a DD file is represented by DD data in XML common format, and the manner in which the DD data is used to generate the corresponding displays. First, the example portion of the DD file is described.

**6. Device Description**

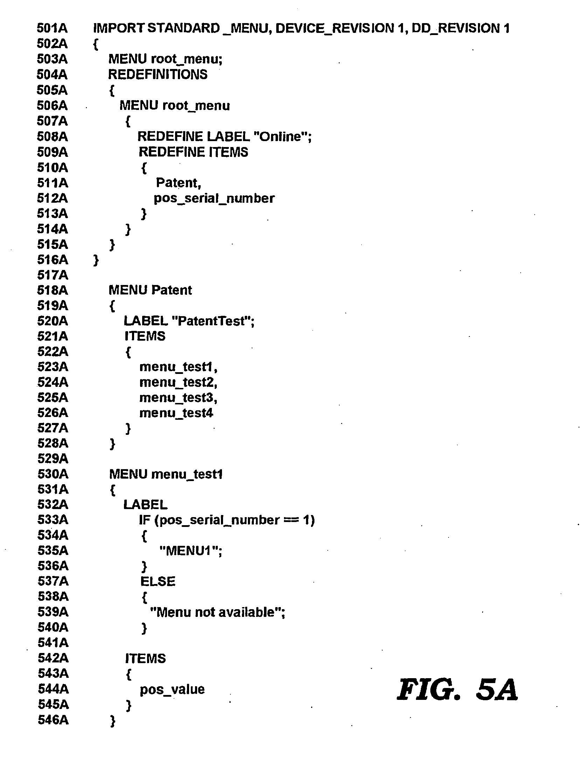

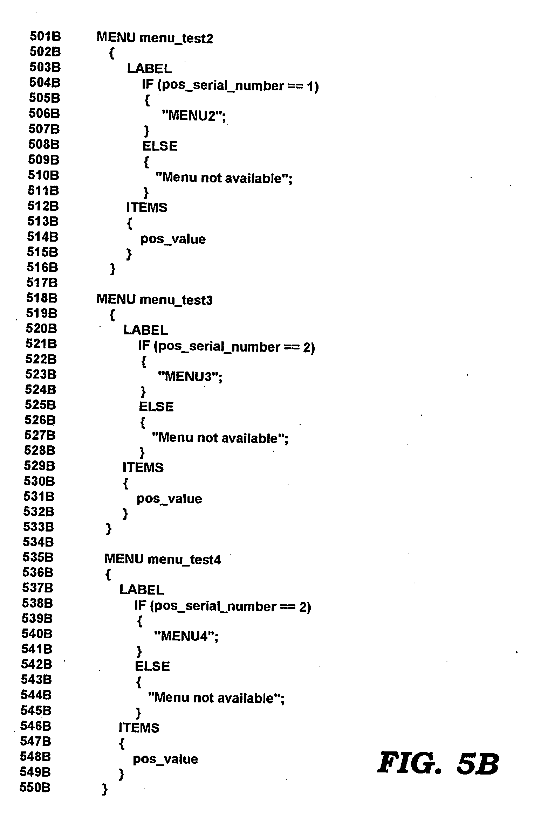

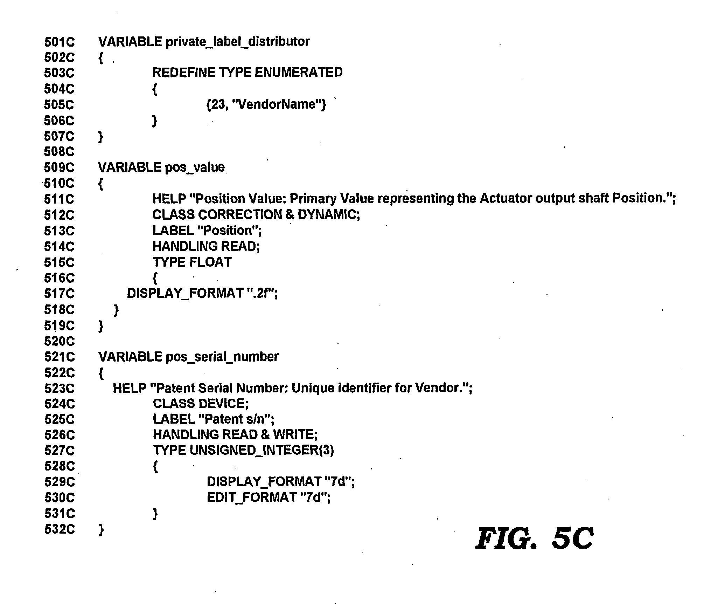

Figures 5A, 5B and 5C together represent a sample device description (DD) portion (related to user interface portion) illustrating the manner in which menus are represented for providing display of various parameters. It should be understood that the device description has been broken into three Figures merely to accommodate respective lines in each Figure, however, lines with numbers ending with B in Figure 5B follow the lines with numbers ending with A in Figure 5A, and numbers ending with C in Figure 5C follow the lines with numbers ending with B in Figure 5B.

In general, a vendor provides the device description in a file (DD file), which needs to be parsed consistent with the (syntax/semantics of) corresponding DD specification. Often, the files are provided in binary representation. However, for understandability, the corresponding source is shown in these three Figures. The content of Figures 5A, 5B and 5C represents a portion of device description corresponding to a menu of a DD written as per HART DDL specification.

Lines 501A-516A represent a description for an information element of type menu (i.e., defining a sub-tree portion), with an identifier of root_menu. The label is set to Online in line 508A. Line 509A defines the start point of the menu items list, and two items are shown as patent and pos_serial_umber in lines 511A and 512A respectively. The definitions of items patent and pos_serial_umber is provided starting at lines 518A and 533C, as described below in further detail.

Lines 518A-528A provide description for information element Patent. Line 518A defines the element as a menu, and label for the patent menu is provided as "patent Test" at line 520. Description at lines 521-528 lists four items under menu "Patent Test" having identifiers menu_test1, menu_test2, menu_test3 and menu_test4, which are respectively defined starting at line numbers 530A, 501 B, 518B, and 535B, as described below.

Lines 530A-546A provides description for the item menu_test1. Line 530A identifies the item as being of menu type. Lines 532A-540A define the label value depending on the value of a variable pos_seriat_humber. Line 535A indicates that the label equals MENU1 if pos_serial_number equals 1, and line 539A indicates that the label equals "Menu not available" otherwise. Lines 542A-546A indicate that an item identified by an information element with identifier pos_value (defined starting at 509C) is provided as a list associated with the displayed label.

continuing with respect to Figure 5B, lines 501B-516B, 518B-533B, and 535B-550B respectively provide description for information elements having identifiers menu_test2, menu_test3, and menu_test4 similar to lines 530-446. The description of each information element provided is similar to the menu_test1. The line504B, line 521 B and line 538B indicates labels for menu_test2, menu_test3, and menu_test4 depend on the values of pos_seriat_number.

From the above, it may be appreciated that pos_serial_number represents a variable, whose value determines the menu/tree structure. In addition, the value associated with a menu item is defined by variable pos_value. The information elements corresponding to the two variables are described below with reference to Figure 5C.

Continuing with reference to Figure 5C, lines 501C-507C describes an information element as being a variable with identifier private_label_distributor, having enumerated static values equaling 23 and "vendor". Lines 509C-517C provide the description of variable pos_value. Description provides a label "Position" (line 513C), a display format of 2f (line 517C) and the field device (line 514C) for displaying.

Lines 533C-544C provides the description of variable pos_serial_number. Line538C indicates the corresponding values are to be read from the device and that the value can be written, line 539C indicates that the values are of unsigned integer type, line 541 C indicates that the variable is to be displayed with a display format of "7d" (seven decimal digits), line 542C indicates that a user interface should allow the value to be edited/provided in the "7d" display format, and display according to description provided for label and display format on line 525C and 529C respectively.

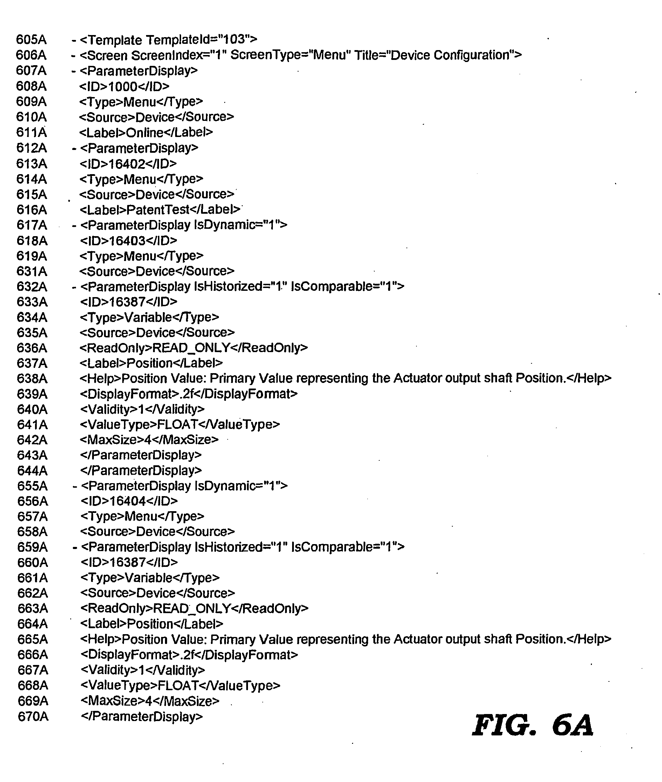

As noted above, according to an aspect of present invention, the device descriptions of different DD specifications are represented in XML format (single common format). The manner in which the content of Figures 5A-5C is represented according to an example approach is described below with respect to Figures 6A-6C.

**7. Device Description in Common Format**

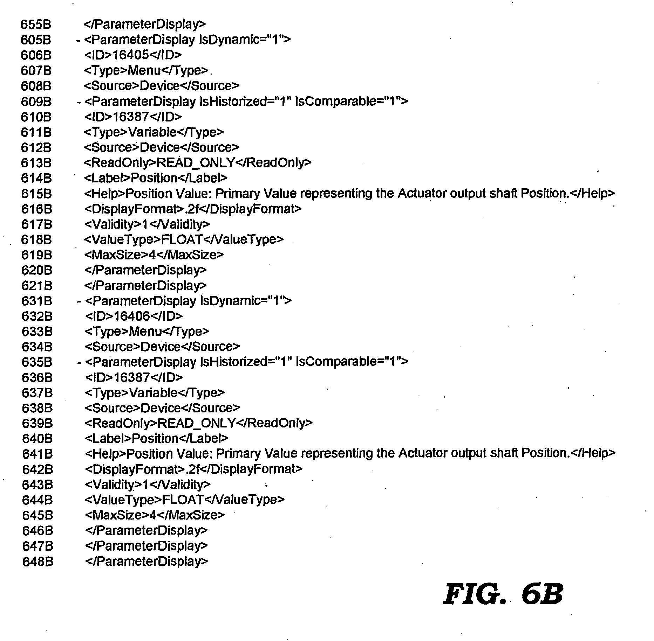

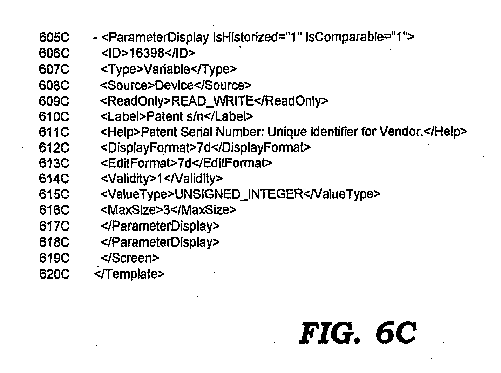

Figure 6A, 6B and 6C together illustrate the manner in which the device description file of Figures 5A, 5B and 5C is represented in XML in an embodiment of the present invention. It should be understood that the device description has been broken into three Figures merely to accommodate respective lines in each Figure, however, lines with numbers ending with B in Figure 6B follow the lines with numbers ending with A in Figure 6A, and numbers ending with C in Figure 6C follow the lines with numbers ending with B in Figure 6B.

To appreciate the manner in which Figures 5A, 5B, and 5C is represented in XML, it is helpful to first note that each element of Figures 5A-5C is assigned a corresponding unique identifier (ID) (when a tokeniser converts the DD source to corresponding binary representation, which is distributed with client systems 110A - 110X), and the assigned identifiers are used in the XML representation. For illustration, it is assumed that identifiers of 1000, 16403, 16404, 16406 and 16407 are respectively assigned for information elements root_menu, menu_test1, menu_test2, menu_test3, and menu_test4. Similarly, IDs of 16387 and 16398 are assigned to variables pos_value and pos_serial_number (seen in Figures 5A-5C).

Continuing with combined reference to Figures 6A-6C, the tag 'template' starting in line 605A and ending in line 620C captures the device description file of Figures 5A, 5B, and 5C. Tag 'screen' starting in line 606A and ending in line 619C identifies the description information as display information. Tag 'Parameter Display' starting in line 607A and ending in line 618C captures menu structure for displaying the information starting with root_menu identified by ID 1000 inline 608A.

Lines 609A-611A capture the information corresponding to root_menu and corresponding labels provided on line 503A-508A. Lines 613A-616A capture information provided in lines 511A and 520A (one of the elements of the root_menu patent and the corresponding label).

The tag contents represented by lines 617A-644A, 656A-670A, 605B-621B, and 631 B-647B respectively captures the information corresponding to menu_test1, menu_test2, menu_test3, and menu_test4 as represented in line 530A-546A, 501B-517B, 518B-533B and 535B-550B along with details of information corresponding to variable pos_value contained in line 509C-519C. Detailed description of only the tags represented by lines 617A-644A is provided below for conciseness.

Line 619A is shown indicating the element menu_test1(16403) as menu. Line 617A indicates that the element (16403) on line 618A is dynamic (corresponding to line 533A). Accordingly the label corresponding to ID 16403 is not captured in XML representation (and central server 150 is relied upon to provide that information). Further, element pos_value on line 544A contained in menu_test1 is captured on line 633A with ID16387. The information pertaining to the variable posvalue provided on lines 411C-517C is captured on lines 634A-642A.

ID 16398 on line 606C corresponds to element pos_serial_number and information corresponding to variable pos_serial_number provided on lines 522C-532C is captured on line 607C-616C. ID 16398 is included (contained with in tags of root_menu) as one of the element contained within root_menu (ID 1000).

It should be appreciated that various approaches (e.g., software utilities) to generate the content of Figures 6A, 6B and 6C from the content of Figures 5A, 5B and 5C will be apparent to one skilled in the relevant arts by reading the disclosure provided herein. In general, the corresponding conversion requires an understanding of the syntax/semantics of the DD specification using which the content of Figures 5A-5C is defined, and the desired format of Figure 6A-6C, as also noted above.

Client system 180 generates display of requested menu portion according to the device description information provided in common format. An example embodiment in which a client system generates display by parsing DD data provided in a common format is described below.

**8. Generating display according to device description in common format**

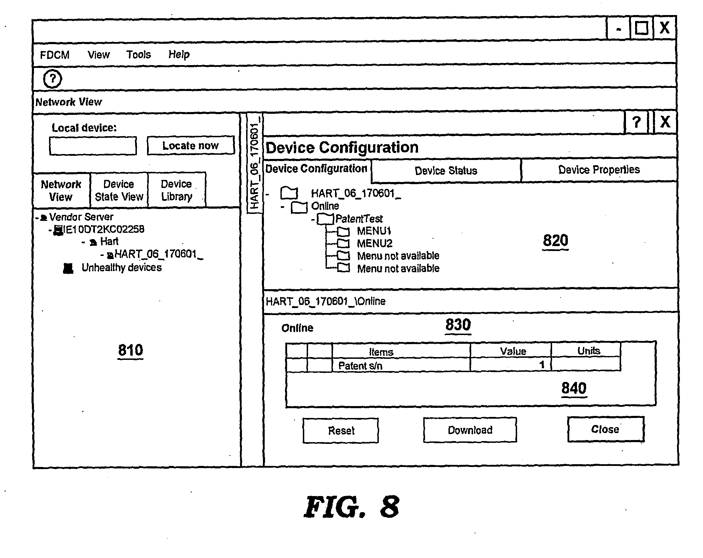

In one embodiment, client system 110A examines the DD data provided in a common format (i.e., content of Figures 6A-6C in the illustrative example) to determine the manner in which user actions are to be processed. In case the display to be generated corresponds to a dynamic menu, client system 110A communicates with central server for obtaining the dynamic menu portion. Client system 110A generates the requested display by integrating the received dynamic menu portion in common format with DD data. Description is continued below assuming a user selects a display portion corresponding to ID16402 (PatentTest also shown below in Figure 8),

Client system 110A parses the DD data provided in a XML common format shown in Figures 6A-6C. Client system 110A identifies dynamic menu containing elements16403, 16404, 16405 and 16406 within the 'Parameter Display' tag (corresponding to ID 16402) starting in line 612A and ending in line 648B. Lines 617A, 655A, 605B, and 631 B, respectively indicate that elements 16403, 16404, 16405 and 16406 are dynamic. Hence client system 110A subscribes/ requests for present display information corresponding to the dynamic menu by sending identifiers 16403, 16404, 16405 and 16406 to central server 150.

Central server 150 examines its copy of the DD (either in the common format or according to the corresponding DD specification) and generates data representing the display of the requested dynamic menu. Any necessary present information (to construct the menu portion and corresponding values) may be obtained from the corresponding field devices by issuing appropriate management commands.

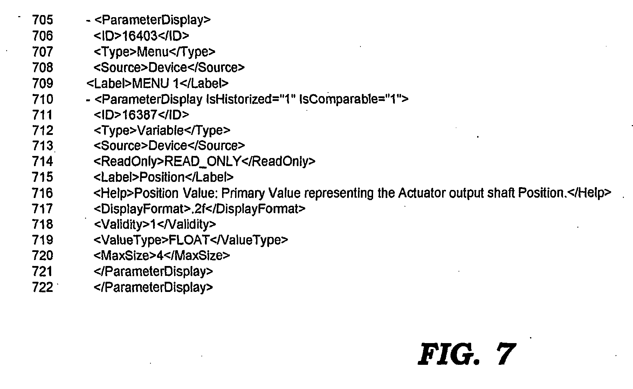

According to an aspect of the present invention, central server 150 sends the dynamic menu data corresponding to elements 16403, 16404, 16405 and 16406 to client system 110A in the common format used to represent the DD data. Figure 7 illustrate an example dynamic menu data for element 16403 received by client system from the central server in common format as described below in further detail.

With respect to Figure 7, line 705 indicates the element 16403 as static and line 707 indicates the element is of type menu. Line 709 provides present label for displaying as 'MENU1'. Line 711 indicates element 16387 contained in menu 'MENU1' and details of displaying the element 16387 is captured in lines 712-720. Line 715, 717 and 719 respectively provide label as 'position', display format as '2f', and type as 'float'.

Continuing with respect to generating display from the DD data in the common format, client system 110A replaces (temporarily/logically) the appropriate portion in the DD data with the content received from the central server (in common format). For example lines 617A-644A (in Figure 6A) corresponding to elements 16403 is replaced with lines 705-722 of Figure 7 received from central server 150. Accordingly the dynamic identifier on line 617A is replaced by a static identifier of line 705. A label 'MENU1' for the menu element 16403 is provided on line 709 which otherwise was not present in figure 6A. As a result the content of the DD data now represents the complete menu structure for present time instant.

Thus, since the received data is in the common format, the received data can be easily inserted into the DD data noted above. In addition, it should be appreciated that the common parser can be used to while generating display from the data received from central server 150, thereby further simplifying the implementation of the user interface. Display corresponding to the menu is then rendered, as illustrated below with respect to Figure 8.

Figure 8 illustrates an example display generated by the client system after replacing the various content of DD data (as noted above) with the data received from the central server 150. The display is shown containing four portions 810, 820, 830 and 840. Description is provided for generation of display portion 820 and 830 of Figure 8 with reference to Figures 6A-6C and Figure 7 for conciseness.

Line 606A indicating screen title as 'Device Configuration' causes client system 110A to generate a title 'Device Configuration' in display portion 820. ID 1000 of line 608A, type indicator menu on line 609 and label 'Online' indicator on line 611A causes client system to provide a menu with label 'Online' as shown. Lines 613A and 605C represents two elements element with ID 16402 and 16398 within menu 'Online'. Lines 614A-616A provide details for element 16402 as menu with 'Patent test' as label and lines 607C-616C provide description for element 16398 as variable with label 'patent s/n' for providing the display. Accordingly a submenu 'Patent test' within menu 'Online' is generated by the client system. Portion 830 provides display of element 16398 as 'patent s/n'.

Display corresponding to four elements 16403, 16404, 16405and16406 contained within submenu 'Patent test' is provided according to the information received from central server 150. The first sub element 16403 of sub menu 'Patent test' is displayed according th data described in Figure 7. Accordingly, a menu with label 'MENU1' is displayed in portion 820. Similarly, assuming a label 'MENU2', 'Menu not available' and 'Menu not available' is received with respect to elements 16404, 16405 and 16406, display is provided accordingly below the sub menu 'Patent test'.

Thus, using the DD data in the common format, a suitable user interface can be generated according to various aspects of the present invention. The features thus provided help in separating UI rendering work from DD interpretation and device communication. Since the common format is platform independent the data can be used on different OS to show the configuration screens. This also helps in supporting thick client and thin client with the same server.

Also, the features described above can be implemented in various embodiments. The description is continued with respect to an embodiment in which various features of the present invention are operative by execution of appropriate software instructions.

**9. Software Implementation**

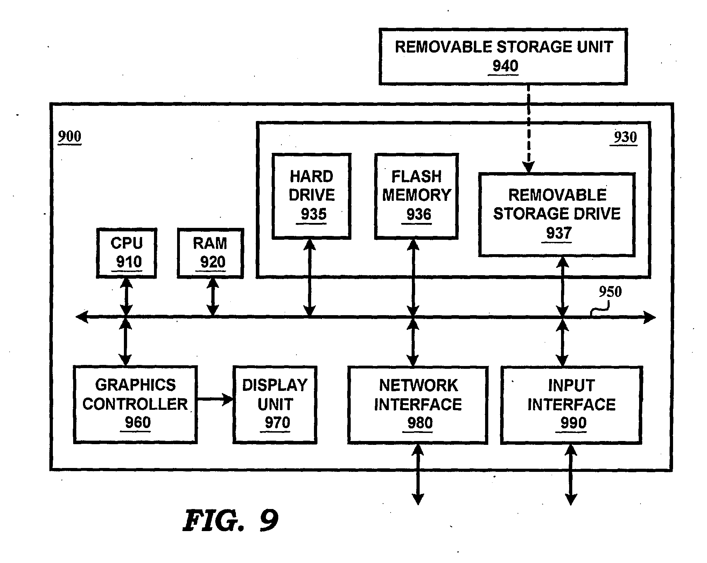

Figure 9 is a block diagram illustrating the details of digital processing system 900 implemented substantially in the form of software in an embodiment of the present invention. System 900 may correspond to one of client systems 110A-110X and central server 150. System 900 may contain one or more processors such as central processing unit (CPU) 910, random access memory (RAM) 920, secondary memory 930, graphics controller 960, display unit 970, network interface 980, and input interface 990. All the components except display unit 970 may communicate with each other over communication path 950, which may contain several buses as is well known in the relevant arts. The components of Figure 9 are described below in further detail.

CPU 910 may execute instructions stored in RAM 920 to provide several features of the present invention. CPU 910 may contain multiple processing units, with each processing unit potentially being designed for a specific task. Alternatively, CPU 910 may contain only a single general purpose processing unit. RAM 920 may receive instructions from secondary memory 930 using communication path 950.

Graphics controller 960 generates display signals (e.g., in RGB format) to display unit 570 based on data/instructions received from CPU 910. Display unit 970 contains a display screen to display the images defined by the display signals. Input interface 990 may correspond to a key_board and/or mouse. Display unit 970 and input interface 990 enable a user to interact with system 900 and manage the field devices.

Network interface 980 provides the physical, electrical and protocol interfaces needed for each system. In the case of client systems 110A-110X, a network connection to communicate on a local area network (to which central server 150 is also connected) using protocols such as TCP/IP may be sufficient. On the other hand, in case of central server 150, in addition to such a network connection, a control network connection to interface with control network 130 may be necessary.

Secondary memory 930 may contain hard drive 935, flash memory 936 and removable storage drive 937. Secondary memory 930 may store the data (e.g., DD data provided according to the common format, DD files, etc.) and software instructions, which enable system 900 to provide several features in accordance with the present invention. Some or all of the data and instructions may be provided on removable storage unit 940, and the data and instructions may be read and provided by removable storage drive 937 to CPU 910. Floppy drive, magnetic tape drive, CD_ROM drive, DVD Drive, Flash memory, removable memory chip (PCMCIA Card, EPROM) are examples of such removable storage drive 937.

Removable storage unit 940 may be implemented using medium and storage format compatible with removable storage drive 937 such that removable storage drive 937 can read the data and instructions. Thus, removable storage unit 940 includes a computer readable storage medium having stored therein computer software and/or data.

In this document, the term "computer program product" is used to generally refer to removable storage unit 940 or hard disk installed in hard drive 935. These computer program products are means for providing software to system 900. CPU 910 may retrieve the software instructions, and execute the instructions to provide various features of the present invention described above.

**10. Conclusion**

While various embodiments of the present invention have been described above, it should be understood that they have been presented by way of example only, and not limitation. Thus, the breadth and scope of the present invention should not be limited by any of the above described exemplary embodiments, but should be defined only in accordance with the following claims.

## Claims

1. A method of managing a plurality of field devices (180A-180Z) in a process control plant, said plurality of field devices (180A-180Z) including a first plurality of device descriptions (210A-210Z) specifying a manner in which said plurality of field devices (180A-180Z) are to be managed, said plurality of device descriptions (210A-210Z) being defined according to a corresponding plurality of specifications, said method comprising:
forming a second plurality of device descriptions (430A-430Y) from said first plurality of device descriptions (210A-210Z), said second plurality of device descriptions (430A-430Y) being in a common format and also specifying said manner in which said plurality of field devices (180A-180Z) can be managed;
a first field device contained in said plurality of field devices (180A-180Z) is arranged to receive data representing a user action associated with a first field device contained in said plurality of field devices (180A-180Z), a first device description (6A-6C) corresponding to said first field device, wherein said first device description (6A-6C) is contained in said second plurality of device descriptions (430A-430Y) in said common format; and
examining said first device description (6A-6C) in said common format to determine the manner in which to process data representing said user action, wherein a common parser (420) is used by said examining due to the use of said common format
**characterised in that** said user action comprises display of a status information of a first field device contained in said plurality of field devices (180A-180Z), and wherein a client system (110A-110X) provides a user interface (250) to manage said first plurality of field devices (180A-180Z), said examining being implemented in said client system (110A-110X), said client system (110A-110X) determining whether a menu portion for displaying said status information is dynamic depending on a present value of a variable, said client system (110A-110X) subscribing to a server (150) for said status information to receive from said server (150) said menu portion (Fig 7) in said common fonnat, if said menu is determined to be dynamic.

2. The method of claim 1, wherein said first device description (6A-6C) contains a unique identifier identifying each information element contained in a corresponding one of said second plurality of device descriptions (430A-430Y), wherein said unique identifier is sent by said client system (110A-110X) to said server (150) system to request data representing said menu portion.

3. A computer readable medium carrying one or more sequences of instructions for causing a system to manage a plurality of field devices in a process control plant by a method according to claim 1 or claim 2.

## Patentansprüche

1. Verfahren zur Verwaltung einer Vielzahl von Einsatzorteinrichtungen (180A-180Z) in einer Prozesssteuerungsanlage, wobei die Vielzahl von Einsatzorteinrichtungen (180A-180Z) eine erste Vielzahl von Einrichtungsbeschreibungen (210A-210Z) umfasst, die eine Weise spezifizieren, auf die die Vielzahl von Einsatzorteinrichtungen (180A-180Z) zu verwalten ist, wobei die Vielzahl von Einrichtungsbeschreibungen (210A-210Z) gemäß einer entsprechenden Vielzahl von Spezifikationen definiert wird, wobei das Verfahren die folgenden Schritte umfasst:
Bilden einer zweiten Vielzahl von Einrichtungsbeschreibungen (430A-430Y) aus der ersten Vielzahl von Einrichtungsbeschreibungen (210A-210Z), wobei die zweite Vielzahl von Einrichtungsbeschreibungen (430A-430Y) in einem gemeinsamen Format vorliegt und auch die Weise spezifiziert, auf die die Vielzahl von Einsatzorteinrichtungen (180A-180Z) verwaltet werden kann;
wobei eine erste in der Vielzahl von Einsatzorteinrichtungen (180A-180Z) enthaltene Einsatzorteinrichtung dafür ausgelegt ist, Daten zu empfangen, die eine mit einer ersten in der Vielzahl von Einsatzorteinrichtungen (180A-180Z) enthaltenen Einsatzorteinrichtung assoziierte Benutzeraktion repräsentieren, wobei eine erste Einrichtungsbeschreibung (6A-6C) der ersten Einsalzorteinrichtung entspricht, wobei die erste Einrichtungsbeschreibung (6A-6C) in der zweiten Vielzahl von Einrichtungsbeschreibungen (430A-430Y) in dem gemeinsamen Format enthalten ist; und
Untersuchen der ersten Einrichtungsbeschreibung (6A-6C) in dem gemeinsamen Format, um die Weise zu bestimmen, auf die die Benutzeraktion repräsentierende Daten zu verarbeiten sind, wobei aufgrund der Verwendung des gemeinsamen Formats beim Untersuchen ein gemeinsamer Parser (420) verwendet wird,
**dadurch gekennzeichnet, dass** die Benutzeraktion eine Anzeige einer Statusinformation einer in der Vielzahl von Einsatzorteinrichtungen (180A-180Z) enthaltenen ersten Einsatzorteinrichtung umfasst und wobei ein Client-System (110A-110X) eine Benutzeroberfläche (250) zum Verwalten der ersten Vielzahl von Einsatzorteinrichtungen (180A-180Z) bereitstellt, wobei das Untersuchen in dem Client-System (110A-110X) implementiert wird und das Client-System (110A-110X) abhängig von einem derzeitigen Wert einer Variablen bestimmt, ob ein Menüteil zum Anzeigen der Statusinformation dynamisch ist, wobei das Client-System (110A-110X) für die Statusinformation bei einem Server (150) subskribiert, um von dem Server (150) den Menüteil (Fig. 7) in dem gemeinsamen Format zu erhalten, wenn bestimmt wird, dass das Menü dynamisch ist.

2. Verfahren nach Anspruch 1, wobei die erste Einrichtungsbeschreibung (6A-6C) eine eindeutige Kennung enthält, die jedes in einer entsprechenden der zweiten Vielzahl von Einrichtungsbeschreibungen (430A-430Y) enthaltene Informationselement identifiziert, wobei das Client-System (110A-110X) die eindeutige Kennung zu dem Serversystem (150) sendet, um den Menüteil repräsentierende Daten anzufordern.

3. Computerlesbares Medium, das eine oder mehrere Sequenzen von Anweisungen trägt, die bewirken, dass ein System eine Vielzahl von Einsatzorteinrichtungen in einer Prozesssteuerungsanlage durch ein Verfahren nach Anspruch 1 oder Anspruch 2 verwaltet.

## Revendications

1. Procédé de gestion d'une pluralité de dispositifs de terrain (180A à 180Z) dans une usine à commande de processus, ladite pluralité de dispositifs de terrain (180A à 180Z) comportant une première pluralité de descriptions de dispositifs (210A à 210Z) spécifiant une manière dont ladite pluralité de dispositifs de terrain (180A à 180Z) doit être gérée, ladite pluralité de descriptions de dispositifs (210A à 210Z) étant définie conformément à une pluralité correspondante de spécifications, et le procédé comprenant :
la formation d'une seconde pluralité de descriptions de dispositifs (430A à 430Y) à partir de ladite première pluralité de descriptions de dispositifs (210A à 210Z), ladite seconde pluralité de descriptions de dispositifs (430A à 430Y) se présentant dans un format commun et spécifiant également ladite manière dont ladite pluralité de dispositifs de terrain (180A à 180Z) peut être gérée ;
un premier dispositif de terrain contenu dans ladite pluralité de dispositifs de terrain (180A à 180Z) est agencé pour recevoir des données représentant une action d'utilisateur associée à un premier dispositif de terrain contenu dans ladite pluralité de dispositifs de terrain (180A à 180Z), une première description de dispositif (6A à 6C) correspondant audit premier dispositif de terrain, dans lequel ladite première description de dispositif (6A à 6C) est contenue dans ladite seconde pluralité de descriptions de dispositifs (430A à 430Y) dans ledit format commun ; et
l'examen de ladite première description de dispositif (6A à 6C) dans ledit format commun afin de déterminer la manière dont il convient de traiter les données représentant ladite action d'utilisateur, dans lequel un analyseur syntaxique commun (420) est utilisé par ledit examen en raison de l'utilisation dudit format commun
**caractérisé en ce que** ladite action d'utilisateur comprend l'affichage d'une information d'état d'un premier dispositif de terrain contenu dans ladite pluralité de dispositifs de terrain (180A à 180Z) et dans lequel un système client (110A à 110X) fournit une interface utilisateur (250) afin de gérer ladite première pluralité de dispositifs de terrain (180A à 180Z), ledit examen étant mis en oeuvre dans ledit système client (110A à 110X), ledit système client (110A à 110X) déterminant si une partie de menu pour afficher ladite information est dynamique ou non en fonction d'une valeur courante d'une variable, ledit système client (110A à 110X) souscrivant à un serveur (150) de ladite information d'état afin de recevoir dudit serveur (150) ladite partie de menu (figure 7) dans ledit format commun, s'il est déterminé que ledit menu est dynamique.

2. Procédé selon la revendication 1, dans lequel ladite première description de dispositif (6A à 6C) contient un identifiant unique qui identifie chaque élément d'information contenu dans une description correspondante de ladite seconde pluralité de descriptions de dispositifs (430A à 430Y), dans lequel ledit identifiant unique est envoyé par ledit système client (110A à 110X) audit système de serveur (150) afin de demander des données représentant ladite partie de menu.

3. Support lisible par ordinateur exécutant une ou plusieurs séquences d'instructions pour amener un système à gérer une pluralité de dispositifs de terrain dans une usine de commande de processus par un procédé selon la revendication 1 ou la revendication 2.
